# EUROPÄISCHE PATENTSCHRIFT

(11) **EP 2 730 942 B1**
(45) Veröffentlichungstag und Bekanntmachung des Hinweises auf die Patenterteilung: **18.03.2015**
(21) Anmeldenummer: 12192389.0
(22) Anmeldetag: 13.11.2012
(51) Int. Cl.: G01S 7/48, G01V 8/12

(54) **Optoelektronischer Scanner**
Opto-electronic scanner
Scanner optoélectronique

(43) Veröffentlichungstag der Anmeldung: 14.05.2014
(73) Patentinhaber: SICK AG, 79183 Waldkirch/Breisgau (DE)
(72) Erfinder: Huber, Gregor, 79110 Freiburg (DE); Kufner, Martin, 79215 Elzach (DE); Szerbakowski, Boris, 79183 Waldkirch (DE); Schmitz, Stephan, Dr., 79108 Freiburg (DE)
(74) Vertreter: Manitz, Finsterwald & Partner GbR

(56) Entgegenhaltungen:
- EP-A1- 2 112 466
- EP-A1- 2 226 650
- WO-A1-2008/154736
- DE-A1- 3 315 288
- US-A1- 2004 135 992
- US-A1- 2010 194 583

## Beschreibung

Die vorliegende Erfindung betrifft einen optoelektronischen Scanner zur Überwachung eines Überwachungsbereiches, mit einem Lichtsender zur Aussendung von Lichtsignalen, einer Lichtablenkeinheit zur - insbesondere periodischen - Ablenkung der vom Lichtsender ausgesandten Lichtsignale in den Überwachungsbereich, einem Lichtempfänger zum Empfangen von Licht, das von einem sich im überwachten Überwachungsbereich befindlichen Objekt zurückgeworfen wird, und einer Steuereinrichtung zur Erzeugung und/oder Beeinflussung der Lichtsignale. Die Erfindung betrifft weiterhin ein Verfahren zur Überwachung eines Überwachungsbereiches, das mit dem optoelektronischen Scanner durchgeführt werden kann.

Zur Überwachung, beispielsweise von Arbeitsbereichen oder von Maschinen, werden häufig optoelektronische Scanner eingesetzt. Ein von einem Lichtsender, der beispielsweise als Laser ausgestaltet ist, erzeugter Lichtstrahl wird über eine Lichtablenkeinheit in einen zu überwachenden Überwachungsbereich gelenkt und dort von einem gegebenenfalls vorhandenen Objekt remittiert bzw. reflektiert. Zumindest ein Teil des remittierten bzw. reflektierten Lichts gelangt wieder zurück zu dem optoelektronischen Scanner und wird dort von einem Empfänger detektiert. Die Lichtablenkeinheit ist in der Regel schwenkbar bzw. drehbar ausgestaltet, so dass der von dem Lichtsender erzeugte Lichtstrahl einen durch die Schwenk- bzw. Drehbewegung erzeugten Überwachungsbereich periodisch überstreicht. Wird vom Objekt remittiertes bzw. reflektiertes Lichtsignal aus dem Überwachungsbereich empfangen, so kann aus der Winkelstellung der Ablenkeinheit auf die Winkellage des Objekts im Überwachungsbereich geschlossen werden. Wird zusätzlich zum Beispiel die Laufzeit von einzelnen Laserlichtpulsen vom Aussenden bis zum Empfang einer Reflexion an dem Objekt überwacht, kann aus der Laufzeit unter Verwendung der Lichtgeschwindigkeit zusätzlich auf die Entfernung des Objekts vom Laserscanner geschlossen werden.

Derartige Sensoren können nicht nur zur Überwachung eines Schutz - oder Gefahrenbereiches eingesetzt werden. Auch zur Erstellung von Entfernungsprofilen und 3D-Abtastungen können solche optoelektronischen Scanner verwendet werden. Der verwendete Begriff "Überwachung" soll in diesem allgemeinen Sinn verstanden werden, auch wenn hier mehrheitlich Beispiele der Sicherheitsanwendung beschrieben sind.

Bei allen Anwendungsfällen lässt sich mit den Winkel- und Entfernungsangaben der Ort des Objekts ermitteln und beispielsweise der vom Laserstrahl überstrichene Überwachungsbereich vollständig überwachen. Befindet sich in dem Überwachungsbereich z.B. ein unzulässiges Objekt, so kann von der Auswerteeinheit des Scanners ein entsprechendes Warn - oder Stoppsignal ausgegeben werden.

Derartige Systeme werden zum Beispiel an Maschinen eingesetzt, bei denen ein Gefahrenbereich überwacht werden muss, der beim Betrieb der Maschine von einer Bedienperson nicht betreten bzw. verletzt werden darf. Wird mit Hilfe des Laserscanners die Anwesenheit eines unzulässigen Objekts - zum Beispiel eines Beins einer Bedienperson - im Gefahrenbereich festgestellt, kann ein Nothalt der Maschine bewirkt werden. Derartige Scansysteme als Sicherheitssensoren müssen zuverlässig arbeiten und deshalb hohe Sicherheitsanforderungen erfüllen, beispielsweise die Norm EN 13849 für Maschinensicherheit und insbesondere die Gerätenorm EN 61496 für berührungslos wirkende Schutzeinrichtungen (BWS).

Solche Sicherheitslaserscanner werden auch bei sogenannten FTS ("Fahrerlose Transportsysteme") eingesetzt, um zu verhindern, dass diese Transportsysteme mit Objekten zusammenstoßen, die ihren Fahrweg kreuzen. Da die Gefahr eines Zusammenstoßes geschwindigkeitsabhängig ist, kann der Laserscanner anpassbare Überwachungsbereichsdimensionen aufweisen, die in Abhängigkeit der Fahrzeuggeschwindigkeit umschaltbar oder in sonstiger Weise veränderbar sind.

Bei der Optimierung von optoelektronischen Scannern spielen eine Reihe von Faktoren eine entscheidende Rolle. Zum einen soll eine möglichst hohe Reichweite bei begrenzter Laserleistung erreicht werden. Zum anderen soll die Größe der Empfangsoptiken möglichst klein gehalten werden, um kleine und gute handhabbare Scanner zu schaffen. Auch muss die Scanfrequenz und die Winkelauflösung berücksichtigt werden, welche beide durch die zur Verfügung stehenden Bauteile limitiert sind.

Zudem ist gerade bei im Außenbereich eingesetzten Scannern eine hohe Fremdlichtfestigkeit sehr wichtig, d.h. die eingesetzten Scanner sollten durch weitere Lichtquellen möglichst wenig beeinflussbar sein. Darüber hinaus müssen meist noch die Bestimmungen einer Laserschutzklasse eingehalten werden.

Bei bisher bekannten optoelektronischen Scannern werden beispielsweise Frequenzbandspreizverfahren (Spread-Spectrum-Verfahren), wie zum Beispiel ein Pulsfolgeverfahren, eingesetzt, um einen verbesserten Signal-Rausch-Abstand zu erzielen. Weiterhin kann durch Spread-Spectrum-Verfahren die Fremdlichtfestigkeit des Scanners erhöht werden.

Ein optoelektronischer Scanner gemäß dem Oberbegriff des Anspruchs 1 ist aus der US 2010/0194583 A1 bekannt. Die DE 33 15 288 A1 offenbart eine optische Radaranlage, welche periodische kurze Lichtimpulse aussendet. Aus der US 2004/0135992 A1 ist eine Vorrichtung zur optischen Entfernungs- und Geschwindigkeitsmessung von Objekten bekannt, die mittels ASCII-Zeichen kodierte Laserpulse verwendet. Ferner betrifft die EP 2 226 650 A1 einen optoelektronischen Scanner, welcher ein DSSS-Frequenzbandspreizverfahren verwendet.

Einen Scanner mit einer Lichtprojektionsvorrichtung und einer beabstandet zu dieser angeordneten Kamera offenbart die EP 2 112 466 A1. Aus der WO 2008/154736 A1 ist ein Beleuchtungssystem für Fahrzeuge bekannt, welches eine gepulste Beleuchtung zur gleichzeitigen Fahrbahnausleuchtung und Hinderniserkennung nutzt.

Ein beispielhafter optoelektronischer Scanner, welcher Pulsfolgeverfahren verwendet, ist aus der DE 10 2010 005 012 A1 bekannt. Dieser nutzt Pseudozufallsfolgen, um beispielsweise Pulsfolgen eines Scanners von Pulsfolgen eines zweiten Scanners unterscheiden zu können.

Nachteilig an bisherigen Pulsfolgeverfahren ist, dass das Signal bekannter Pulsfolgeverfahren einen hohen Anteil an niederen Frequenzen aufweist. Da diese im Empfänger nicht ausgefiltert werden können, ohne Nutzsignalanteile zu verlieren, kann niederfrequentes Rauschen in den Signalpfad gelangen.

Der Erfindung liegt die Aufgabe zugrunde, einen optoelektronischen Scanner mit erhöhtem Signal-Rausch-Abstand und verbesserter Fremdlichtfestigkeit anzugeben.

Erfindungsgemäß wird diese Aufgabe durch einen optoelektronischen Scanner gemäß Anspruch 1 gelöst, und insbesondere dadurch, dass die von dem Lichtsender in den Überwachungsbereich ausgesandten Lichtsignale jeweils auf der Basis eines - insbesondere nach einem Frequenzbandspreizverfahren und/oder Optimalfilterverfahren - modulierten Ausgangssignals erzeugt sind und das Ausgangssignal ein binäres Signal aus Nullen und Einsen ist, wobei der Lichtsender eingeschaltet ist, wenn eine Eins übertragen wird, und ausgeschaltet ist, wenn eine Null übertragen wird. Zudem basiert das Ausgangssignal auf einer m-Sequenz (maximum length sequence), wobei die Anzahl aufeinanderfolgender Nullen der m-Sequenz mit einem Faktor N, welcher größer als Eins ist, erhöht wird. Der erfindungsgemäße optoelektronische Scanner weist dazu eine Steuereinrichtung auf, mit deren Hilfe das Ausgangssignal entsprechend moduliert werden kann.

Im Vergleich zu herkömmlichen Pulsfolgeverfahren, bei welchen die Anzahl der Nullen und die Anzahl der Einsen im Wesentlichen gleich sind, wird erfindungsgemäß die Gleichverteilung aufgehoben und von der Steuereinrichtung eine Pulsfolge als Ausgangssignal erzeugt, bei welchem ein Anteil von Nullen in dem Ausgangssignal gegenüber einem Anteil von Einsen erhöht ist. Die Steuereinrichtung ist zu diesem Zweck dazu ausgebildet, ein entsprechendes Ausgangssignal zu erzeugen und den Lichtsender auf der Grundlage des Ausgangssignals anzusteuern.

Bei einer Ausgestaltung unter Einsatz eines Optimalfilters ist die Bildung des Skalarproduktes des empfangenen Signals mit der bekannten Pulsfolge eine besondere Form eines Optimalfilters. Ein Optimalfilter ist dabei ein Filter, das das Signal-Rausch-Verhältnis optimiert. Dabei ist vorteilhafterweise ein Ausgangssignal quasi-orthogonal zu einem zweiten Ausgangssignal bzw. weisen die Pulsfolgen eine hohe Autokorrelation und eine geringe Kreuzkorrelation auf.

Die Anzahl sowie die Gesamtenergie der ausgesandten Einsen ist dabei identisch zu bekannten Pulsfolgeverfahren. In der Pulsfolge ist das Signal-Rausch-Verhältnis jedes Einzelpulses unverändert. Allerdings wird die Aktivierung des Lichtsenders durch die höhere Anzahl an Nullen über einen längeren Zeitraum verteilt, wodurch die Durchschnittsleistung des Lichtsenders während einer Messung sinkt, mit der auch eine geringere thermische Belastung des Lichtsenders einhergeht.

Die Begriffe "Nullen" und "Einsen" sollen hier sehr breit verstanden werden. Dementsprechend kann das Ausgangssignal, welches ein binäres Signal aus Nullen und Einsen ist, zumindest zwei Zustände aufweisen, wobei die Nullen und Einsen beliebig codiert sein können.

Durch die erfindungsgemäße Ungleichverteilung von Nullen und Einsen werden im Mittel seltener Einsen gesendet als bei herkömmlichen Pulsfolgeverfahren, wodurch auch mehr Sprünge zwischen Nullen und Einsen entstehen können, die somit höhere Frequenzen umfassen. Dadurch verschiebt sich die Frequenzverteilung der gesendeten Pulsfolge hin zu höheren Frequenzen. Das Signal der erfindungsgemäßen Pulsfolge ist folglich durch seinen Anteil an höheren Frequenzen besser von niederfrequentem Rauschen eines Fremdlichtanteils zu unterscheiden, was zu einem besseren Signal-Rausch-Verhältnis des Gesamtsignals führt.

Durch den erfindungsgemäßen optoelektronischen Scanner wird somit eine Überwachung mit einem verbesserten Signal-Rausch-Verhältnis sowie mit einer verminderten Störempfindlichkeit ermöglicht.

Vorteilhafte Ausführungsformen der Erfindung sind in der Beschreibung, den Zeichnungen sowie den Unteransprüchen beschrieben.

Vorteilhafterweise beträgt die Breite der Einzelpulse der verwendeten Pulsfolgen nur wenige Nanosekunden, zum Beispiel 5 ns.

Gemäß einer ersten vorteilhaften Ausführungsform weist das Ausgangssignal zum Beispiel mehr als zehn Mal mehr Nullen als Einsen auf. Anders ausgedrückt, werden nur in einem Zeitintervall, das einem Zehntel des Zeitintervalls der Nullen entspricht, Einsen gesendet.

Dabei ist es auch möglich, anstatt zehn Mal mehr Nullen als Einsen auch nur doppelt so viele Nullen wie Einsen oder gar zwanzig oder einhundertmal so viele Nullen wie Einsen zu senden. Da jedoch die Anzahl der Einsen im Vergleich zu herkömmlichen Pulsfolgeverfahren beibehalten werden soll, verlängert sich die Abtastdauer für den Überwachungsbereich umso mehr, umso mehr Nullen gesendet werden. Durch die Wahl des Bereichs von etwa zehn Mal mehr Nullen als Einsen ergibt sich eine gute Balance zwischen der vorteilhaften Frequenzerhöhung des gesendeten Spektrums bzw. der Erhöhung der Orthogonalität des Ausgangssignals einerseits und der Erhöhung der Abtastzeit andererseits.

Gemäß einer weiteren vorteilhaften Ausführungsform werden die Lichtsignale durch On-/Off-Keying erzeugt, wobei vorzugsweise maximal eine Eins in Folge gesendet wird. Der Lichtsender wird folglich immer dann eingeschaltet, wenn eine Eins übertragen werden soll. Eine Null wird durch ausgeschalteten Lichtsender dargestellt.

Das Ausgangssignal wird durch den Lichtsender also als "Return-to-Zero"-(RZ)-Code dargestellt, was eine einfachere technische Umsetzung als bei bekannten "Non-Return-to-Zero"-(NRZ)-Codes ermöglicht. Insbesondere kann deshalb eine Treiberstufe für den Lichtsender in der Steuereinheit besonders kostengünstig als "Ein- / Ausschalter" ausgestaltet sein.

Vorzugsweise wird maximal eine Eins in Folge gesendet, das heißt, der Lichtsender wird jeweils nur für einen möglichst kurzen Zeitraum aktiviert. In der Folge wird das ausgesandte Spektrum durch die verkürzten Pulse noch weiter zu höheren Frequenzen verschoben, wodurch sich wiederum eine verbesserte Störsicherheit ergibt. Das Senden maximal einer Eins in Folge ist dabei nicht zwangsläufig an Lichtsignale gebunden, die durch On-/Off-Keying erzeugt werden, sondern soll als eigenständige Weiterbildung des erfindungsgemäßen optoelektronischen Scanners gesehen werden.

Erfindungsgemäß sind die Einsen im Wesentlichen zufällig in dem Lichtsignal verteilt. Die Festlegung der Positionen der Einsen kann dabei beispielsweise unter Einsatz von Methoden zur Erzeugung von Zufallszahlen bzw. Pseudozufallszahlen erfolgen.

Weiterhin erfindungsgemäß basiert das Ausgangssignal auf einer m-Sequenz (maximum length sequence), wobei die Anzahl aufeinanderfolgender Nullen der m-Sequenz mit einem Faktor N, welcher größer als Eins ist, erhöht wird. Die Steuereinrichtung kann dazu ausgestaltet sein, eine m-Sequenz zu generieren, welche zur initialen Festlegung der Position der Einsen in dem Ausgangssignal dient, wobei in die m-Sequenz zusätzliche Nullen durch die Verlängerung von Reihen aufeinanderfolgender Nullen mit dem Faktor N eingefügt werden. Im Resultat weist das entstehende Ausgangssignal mehr Nullen als Einsen auf.

Die m-Sequenz kann dabei initial eine Anzahl an Einsen umfassen, die um Eins größer ist als ihre Anzahl an Nullen.

Gemäß einer weiteren vorteilhaften Ausführungsform werden direkt aufeinanderfolgende Einsen in der m-Sequenz in Nullen geändert, wobei jeweils nur die letzte Eins der aufeinanderfolgenden Einsen bestehen bleibt. Folglich kann auch auf der Grundlage der m-Sequenz jeweils nur eine Eins in Folge gesendet werden, wodurch sich das gesendete Frequenzspektrum hin zu höheren Frequenzen verschieben kann, welche weniger störanfällig sind. Aufgrund der über einen längeren Zeitraum verteilten Ausstrahlung der Einsen vermindert sich die thermische Belastung des Lichtsenders.

Alternativ ist es auch möglich, jeweils die erste Eins einer Gruppe von aufeinanderfolgenden Einsen bestehen zu lassen.

Ebenfalls alternativ ist es möglich, in eine Gruppe von aufeinanderfolgenden Einsen nach jeder Eins eine Null einzufügen, wodurch eine alternierende Folge aus Einsen und Nullen entsteht.

Gemäß einer weiteren vorteilhaften Ausführungsform wird das Ausgangssignal durch ein stochastisches Verfahren erzeugt. Die Steuereinrichtung kann zu diesem Zweck eine Stochastikeinheit umfassen, welche das Ausgangssignal erzeugt. Dabei kann die Autokorrelation und die Kreuzkorrelation der durch die stochastischen Methoden erzeugten Pulsfolgen herangezogen werden, um geeignete Pulsfolgen auszuwählen. Wesentlich dabei ist, dass die Pulsfolgen eine möglichst hohe Autokorrelation und eine möglichst geringe Kreuzkorrelation besitzen.

Beispielsweise kann die Verteilung der Einsen im Lichtsignal auf der Grundlage von Gold-Sequenzen, Kasami-Sequenzen oder Hadamard-Walsch-Sequenzen erfolgen. Alternativ sind weitere Methoden zur Erzeugung von Pseudozufallszahlen, beispielsweise mittels linear rückgekoppelter Schieberegister, ebenfalls möglich.

Je länger eine Pulsfolge ist, umso einfacher ist die Generation einer derartigen Pulsfolge, da mit der Länge der Pulsfolge auch die Anzahl der in dieser Länge darstellbaren Pulsfolgen exponentiell steigt.

Gemäß einer weiteren vorteilhaften Ausführungsform ist das Ausgangssignal quasi-orthogonal zu einem zweiten Ausgangssignal. Überlagerungen von zwei Ausgangssignalen, beispielsweise von zwei benachbarten optoelektronischen Scannern können somit leicht erkannt werden. Insbesondere bietet die oben erläuterte, mit dem Faktor N gestreckte m-Sequenz die Möglichkeit, quasi-orthogonale Pulsfolgen zu erzeugen. Auch können beispielsweise Gold-Sequenzen annähernd orthogonal zueinander sein.

Gemäß einer weiteren vorteilhaften Ausführungsform wird die Dauer einzelner Codeelemente des Lichtsignals variiert. Die einzelnen Codeelemente, die auch als Chips bezeichnet werden, sind gegenüber herkömmlichen Pulsfolgeverfahren nicht immer gleich lang, sondern verlängert oder verkürzt.

Gemäß einer weiteren vorteilhaften Ausführungsform weisen alle Pulse des Lichtsignals gleiche Länge, gleiche Form und gleiche Bandbreite auf. Dies gestattet einen einfachen Aufbau des Lichtempfängers, der auf die zu empfangende Pulslänge und Bandbreite abgestimmt sein sollte. Die Verwendung eines einfachen, kostengünstigen Lichtempfängers ist somit möglich.

Gemäß einer weiteren vorteilhaften Ausführungsform umfasst der Lichtempfänger einen Hochpassfilter zur Filterung der zurückgeworfenen Lichtsignale, welcher z.B. eine Grenzfrequenz von > 10 MHz aufweist. Durch den Hochpassfilter werden niederfrequente Signalanteile der von Objekten in dem Überwachungsbereich remittierten bzw. reflektierten Pulsfolge herausgefiltert, die üblicherweise durch Störungen wie beispielsweise Fremdlicht hervorgerufen werden. Die Störanfälligkeit des optoelektronischen Scanners wird somit verbessert. Insbesondere durch die Wahl einer hohen Grenzfrequenz wird eine besonders starke Störunterdrückung erreicht. Abhängig von der Anwendung und dem Frequenzspektrum des gesendeten Signals sind Grenzfrequenzen zwischen 1 MHz und 50 MHz besonders sinnvoll.

Diese Möglichkeit zur Hochpassfilterung stellt einen wesentlichen Vorteil des erfindungsgemäßen optoelektronischen Scanners dar.

Gemäß einer weiteren vorteilhaften Ausführungsform werden die zurückgeworfenen Lichtsignale in dem Lichtempfänger mittels einer Ein-Bit-Quantisierung abgetastet. Der Lichtempfänger umfasst zu diesem Zweck vorzugsweise einen Sigma-Delta-Wandler. Die Digitalisierung des empfangenen Lichtsignals kann somit durch einen kostengünstig bereitzustellenden Ein-Bit-Quantisierer bzw. Komparator erfolgen.

Gemäß einer weiteren vorteilhaften Ausführungsform werden die zurückgeworfenen Lichtsignale mit den ausgesandten Lichtsignalen korreliert. Dabei ist der optoelektronische Scanner dazu ausgebildet, die von ihm empfangenen Lichtsignale mit dem ausgesandten Lichtsignal und damit mit dem Ausgangssignal zu korrelieren. Durch die Korrelation können beispielsweise Störsignale herausgerechnet werden.

Werden die zurückgeworfenen Lichtsignale nur mit einem Bit quantisiert, kann die Korrelation sehr effizient berechnet werden. Zudem steigt dann der Berechnungsaufwand mit der zeitlichen Abtastdauer nur linear.

Die Erfindung umfasst weiterhin ein Verfahren zur Überwachung eines Überwachungsbereiches, bei dem ein binäres, Nullen und Einsen aufweisendes Ausgangssignal als Pulsfolge erzeugt wird. Lichtsignale, die - insbesondere auf der Basis eines Frequenzbandspreizverfahrens (Spread Spectrum) oder eines Optimalfilterverfahrens - mit dem Ausgangssignal moduliert sind, werden von einem Lichtsender ausgesandt und periodisch in den Überwachungsbereich abgelenkt, wobei der Lichtsender eingeschaltet ist, wenn eine Eins übertragen wird, und ausgeschaltet ist, wenn eine Null übertragen wird. Aus Licht, das von einem sich im überwachten Überwachungsbereich befindlichen Objekt zurückgeworfen wird, wird ein Empfangssignal erzeugt, welches abgetastet und mit dem Ausgangssignal korreliert wird, wobei das Ausgangssignal mehr Nullen als Einsen aufweist und die Einsen im Wesentlichen zufällig in dem Lichtsignal verteilt sind, wobei der Lichtsender eingeschaltet ist, wenn eine Eins übertragen wird, und ausgeschaltet ist, wenn eine Null übertragen wird, und das Ausgangssignal auf einer m-Sequenz basiert, wobei die Anzahl aufeinanderfolgender Nullen der m-Sequenz mit einem Faktor, welcher größer 1 ist, erhöht wird.

Gemäß einer weiteren vorteilhaften Ausführungsform des erfindungsgemäßen Verfahrens werden niederfrequente Anteile des Empfangssignals entfernt.

Bevorzugt werden aufeinanderfolgende Einsen in der m-Sequenz in Nullen geändert, wobei jeweils nur die letzte Eins der aufeinanderfolgenden Einsen bestehen bleibt, und/oder nach jeder Eins eine Null eingefügt wird.

Für den vorliegenden Text bezeichnet der Begriff "Licht" nicht nur sichtbares Licht, sondern auch andere geeignete elektromagnetische Strahlung, zum Beispiel auch infrarotes oder ultraviolettes Licht.

Der erfindungsgemäße optoelektronische Scanner und das erfindungsgemäße Verfahren sind besonders vorteilhaft bei der Überwachung eines Gefahren- oder Schutzbereiches einsetzbar, da dort die erhöhte Sicherheit, die durch das erhöhte Signal-Rausch-Verhältnis bzw. die verbesserte Fremdlichtfestigkeit gewährleistet wird, besonders vorteilhaft zum Tragen kommt. Die Vorteile des erfindungsgemäßen optoelektronischen Scanners und des erfindungsgemäßen Verfahrens sind aber auch vorteilhaft bei anderen Anwendungen einsetzbar, z.B. bei der Erstellung von Entfernungsprofilen und 3D-Abtastungen. Der verwendete Begriff "Überwachung" ist dabei in diesem allgemeinen Sinne zu verstehen.

Nachfolgend wird die Erfindung beispielhaft anhand einer möglichen Ausführungsform unter Bezugnahme auf die beigefügten Zeichnungen beschrieben. Es zeigen:
- Fig. 1: eine schematische Darstellung einer beispielhaften Ausführungsform eines erfindungsgemäßen optoelektronischen Scanners;
- Fig. 2a: einen zeitlichen Amplitudenverlauf einer herkömmlichen Pulsfolge und einer Pulsfolge mit einem erhöhten Anteil Nullen;
- Fig. 2b: die Frequenzspektren der in Fig. 2a dargestellten Pulsfolgen.

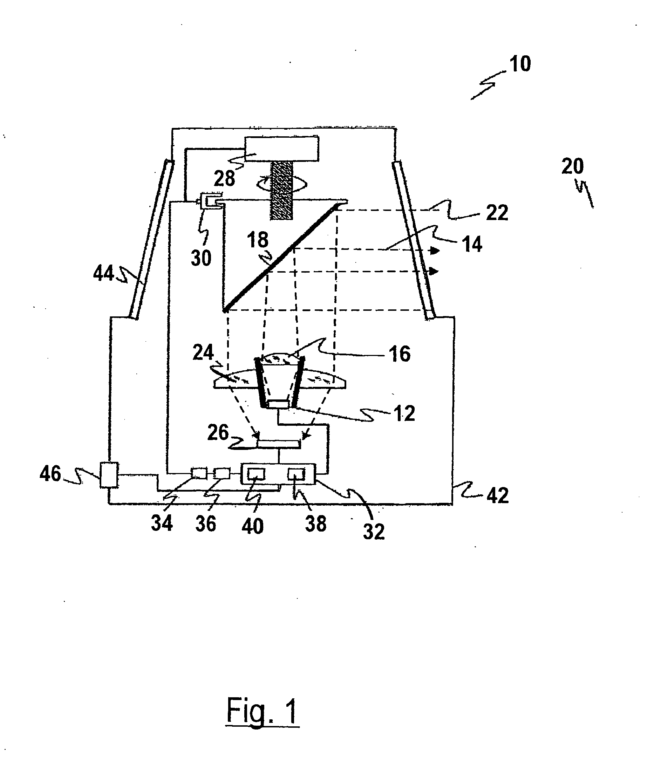

Fig. 1 zeigt schematisch den Aufbau eines optoelektronischen Scanners 10. Von einer Laserdiode 12 wird ein Sendelichtstrahl 14 ausgesandt, der mittels einer Sendeoptik 16 gebündelt und auf eine Ablenkeinheit 18 projiziert wird. Die Ablenkeinheit 18 strahlt den Sendelichtstrahl 14 in einen Überwachungsbereich 20, welcher dort von gegebenenfalls vorhandenen Objekten remittiert bzw. reflektiert wird. Remittiertes bzw. reflektiertes Licht 22, welches wieder zu dem Laserscanner 10 zurückgelangt, wird mittels der Ablenkeinheit 18 und einer Empfangsoptik 24 einem Lichtempfänger 26 zugeführt, der beispielsweise als Fotodiode oder als Lawinenfotodiode (APD) ausgeführt sein kann.

Im Betrieb wird die Ablenkeinheit 18 von einem Motor 28 in eine kontinuierliche Drehbewegung mit einer Scanfrequenz versetzt. Dadurch tastet der Sendelichtstrahl 14 eine Ebene ab. Am Außenumfang der Ablenkeinheit 18 ist eine Winkelmesseinheit 30 angeordnet, welche die jeweilige Winkelstellung der Ablenkeinheit 18 erfasst. Die Winkelmesseinheit 30 kann beispielsweise von einer Strichscheibe als Winkelmaßverkörperung und einer Gabellichtschranke zur Abtastung gebildet werden.

Eine Auswertungseinheit 32, die zugleich Steuerungsfunktionen des Laserscanners 10 übernimmt, ist mit dem Lichtempfänger 26, dem Motor 28 und der Winkelmesseinheit 30 verbunden. Zur Drehzahlregelung des Motors 28 umfasst der optoelektronische Scanner 10 einen Motortreiber 34 sowie eine Winkeldigitalisierungseinheit 36, die der Auswertungseinheit 32 den von der Winkelmesseinheit 30 gemessenen Drehwinkel der Ablenkeinheit 18 in digitaler Form zur Verfügung stellt.

Die Auswertungseinheit 32 umfasst weiterhin eine Signalsendeeinheit 38, welche ausgebildet ist, ein elektrisches Ausgangssignal 50 auf der Basis einer m-Sequenz zu erzeugen, wobei die Anzahl aufeinanderfolgender Nullen der m-Sequenz hier mit einem Faktor 10 erhöht wird. Die Signalsendeeinheit 38 steuert zudem die Laserdiode 12 entsprechend des Ausgangssignals 50 an.

Ferner umfasst die Auswertungseinheit 32 eine Empfangseinheit 40, welche zur Ein-Bit-Quantisierung des von dem Lichtempfänger 26 detektierten remittierten bzw. reflektierten Lichts 22 ausgestaltet ist. Weiterhin umfasst die Empfangseinheit 40 einen (nicht gezeigten) Hochpassfilter mit einer Grenzfrequenz von 10 MHz und eine (ebenfalls nicht gezeigte) Korrelationseinheit, welche die quantisierten Eingangssignale mit dem Ausgangssignal korreliert.

Der optoelektronische Scanner 10 ist in einem Gehäuse 42 angeordnet, welches eine umlaufende Frontscheibe 44 aufweist. Der Scanner 10 kann somit einen 360° umfassenden Überwachungsbereich 20 abdecken.

Insbesondere für Anwendungen in der Sicherheitstechnik umfasst der optoelektronische Scanner 10 eine Schnittstelle 46, welche vorzugsweise als sicherer Ausgang (OSSD, Output Signal Switching Device) zur Übermittlung eines sicherheitsgerichteten Abschaltsignals bei Erkennen einer Verletzung des Überwachungsbereichs 20 an die Steuerung einer sicherheitskritischen Maschine ausgelegt ist.

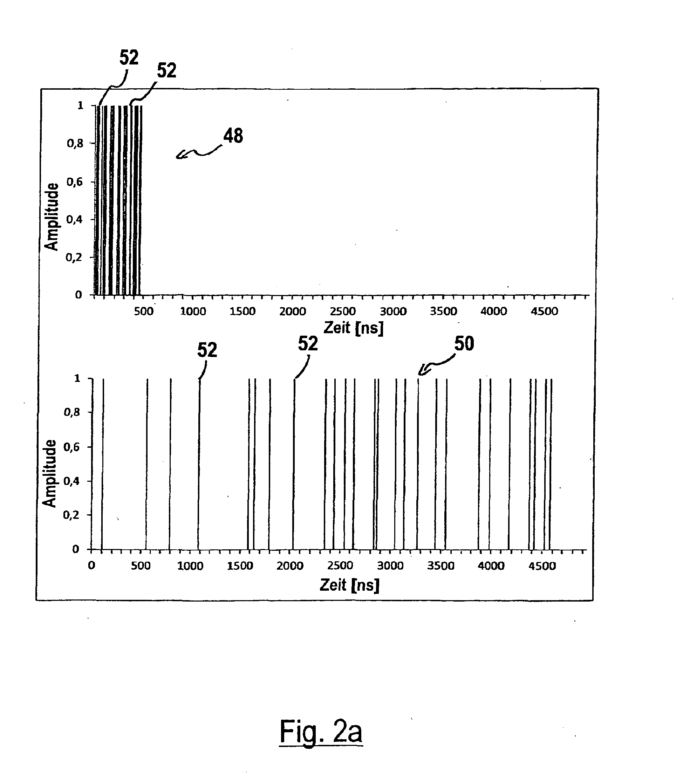

Fig. 2a zeigt im oberen Teil einen Amplitudenverlauf einer herkömmlichen Pulsfolge 48. Im Vergleich dazu ist im unteren Teil eine von einem erfindungsgemäßen optoelektronischen Scanner 10 ausgesandten Pulsfolge 50 mit erhöhter Anzahl Nullen dargestellt. Es ist jeweils die Pulsfolge einer Scanperiode gezeigt. Einzelpulse 52 der Pulsfolgen 48, 50 weisen jeweils eine Breite von 5 ns auf. Der in Fig. 2a dargestellte Zeitbereich beträgt etwa 5 µs.

Die Pulsfolge 50 mit erhöhter Anzahl Nullen weist dabei zehn Mal so viele Nullen auf wie die herkömmliche Pulsfolge 48. Dementsprechend ist die Dauer der Pulsfolge 50 annähernd zehn Mal so lang wie die Dauer der herkömmlichen Pulsfolge 48.

Einzelpulse 52 der Pulsfolgen 48, 50 weisen dabei die gleiche Amplitude auf. Die Pulsfolge 50 mit erhöhter Anzahl Nullen weist zwischen den Einzelpulsen 52, die als Einsen angesehen werden und bei denen die Laserdiode 12 in Betrieb ist, längere Abschnitte mit Nullen auf, bei welchen die Laserdiode 12 nicht in Betrieb ist und ausgeschaltet ist.

Bei der herkömmlichen Pulsfolge 48 werden teilweise mehrere Einsen in direkter Folge gesendet. Die Pulsfolge 50 mit erhöhter Anzahl Nullen umfasst dagegen lediglich einzelne Einsen. Dementsprechend sind die Einsen als Einzelpulse 52 dargestellt.

Sowohl die herkömmliche Pulsfolge 48 als auch die Pulsfolge mit erhöhter Anzahl Nullen 50 weisen im in Fig. 2a jeweils dargestellten Zeitbereich aber einen identischen Energieinhalt auf.

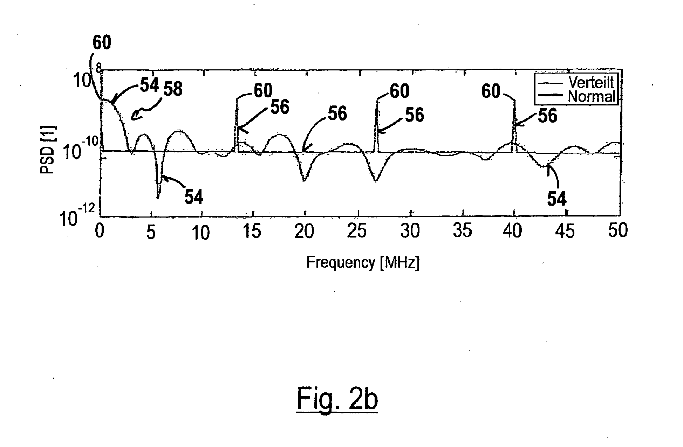

Aufgrund der vereinzelt und einzeln gesendeten Einzelpulse 52 der Pulsfolge mit erhöhter Anzahl Nullen 50 verschiebt sich das Frequenzspektrum der Pulsfolge mit erhöhter Anzahl Nullen 50 im Vergleich zu der herkömmlichen Pulsfolge 48 hin zu höheren Frequenzen, wie dies im Folgenden unter Bezugnahme auf Fig. 2b erläutert wird.

Die spektrale Leistungsdichteverteilung der in Fig. 2a dargestellten Pulsfolgen 48, 50 ist in dem Diagramm der Fig. 2b über der Frequenz dargestellt. Eine herkömmliche Frequenzverteilung 54 (basierend auf einer herkömmlichen Pulsfolge 48) ist einer Frequenzverteilung 56 bei erhöhter Anzahl Nullen (basierend auf einer Pulsfolge 50) gegenübergestellt. Dabei ist insbesondere zu erkennen, dass ein hoher Energieanteil der herkömmlichen Frequenzverteilung 54 in einem Bereich niedriger Frequenzen liegt, welcher in Fig. 2b mit 58 gekennzeichnet ist. In dem niederfrequenten Anteil 58, welcher also einen beträchtlichen Energieanteil der herkömmlichen Pulsfolge 48 ausmacht, sind viele Störsignale, beispielsweise durch Fremdlicht enthalten.

Die Frequenzverteilung 56, die auf der gespreizten Pulsfolge 50 beruht, weist hingegen vier Peaks 60 auf, von welchen drei Peaks 60 erst ab Frequenzen von > 10 MHz auftreten und sich gut durch den Hochpassfilter der Auswertungseinheit 32 von niederfrequenten Störsignalen trennen lassen.

Beim Betrieb des hier beschriebenen erfindungsgemäßen optoelektronischen Scanners 10 wird in der Auswertungseinheit 32 ein Ausgangssignal 50 erzeugt, welches im gezeigten Beispiel zehn Mal mehr Nullen als Einsen aufweist und wobei jeweils nur eine Eins in direkter Folge gesendet wird. Das Ausgangssignal wird anschließend durch die Laserdiode 12 mittels On-/Off-Keying in den Überwachungsbereich 20 projiziert. Objekte in dem Überwachungsbereich 20 remittieren bzw. reflektieren den Sendelichtstrahl 14, was in dem optoelektronischen Scanner 10 mittels des Lichtempfängers 26 detektiert wird. Das von dem Lichtempfänger 26 daraufhin ausgegebene Signal wird von der Auswertungseinheit 32 mittels Abtastung, Hochpassfilterung und Korrelation verarbeitet. Die Hochpassfilterung ist dabei insbesondere deshalb möglich, weil das Empfangssignal, das auf dem Ausgangssignal beruht, einen sehr hohen Anteil hoher Frequenzen aufweist. Die Auswertung wird somit nicht durch niederfrequente Störungen beeinflusst.

Wird bei der Auswertung ein Objekt in dem Überwachungsbereich 20 erkannt, kann mittels der Schnittstelle 46 ein Signal ausgegeben werden, wodurch beispielsweise Sicherheitsprozeduren, wie das Abschalten einer Maschine, eingeleitet werden können.

### Bezugszeichenliste

- 10: optoelektronischer Scanner
- 12: Laserdiode
- 14: Sendelichtstrahl
- 16: Sendeoptik
- 18: Ablenkeinheit
- 20: Überwachungsbereich
- 22: remittiertes Licht
- 24: Empfangsoptik
- 26: Lichtempfänger
- 28: Motor
- 30: Winkelmesseinheit
- 32: Auswertungseinheit
- 34: Motortreiber
- 36: Winkeldigitalisierungseinheit
- 38: Signalsendeeinheit
- 40: Empfangseinheit
- 42: Gehäuse
- 44: Frontscheibe
- 46: Schnittstelle
- 48: herkömmliche Pulsfolge
- 50: Pulsfolge mit erhöhter Anzahl Nullen
- 52: Einzelpuls
- 54: herkömmliche Frequenzverteilung
- 56: Frequenzverteilung bei erhöhter Anzahl Nullen
- 58: niederfrequenter Anteil
- 60: Peak

## Patentansprüche

1. Optoelektronischer Scanner (10) zur Überwachung eines Überwachungsbereiches, mit einem Lichtsender (12) zur Aussendung von Lichtsignalen (14), einer Lichtablenkeinheit (18) zur periodischen Ablenkung der vom Lichtsender (12) ausgesandten Lichtsignale (14) in den Überwachungsbereich (20), einem Lichtempfänger (26) zum Empfang von von einem sich im überwachten Überwachungsbereich (20) befindlichen Objekt zurückgeworfenem Licht (22), und einer Steuereinrichtung (32) zur Erzeugung und/oder Beeinflussung der Lichtsignale (14), wobei
die von dem Lichtsender (12) in den Überwachungsbereich (20) ausgesandten Lichtsignale (14) jeweils auf der Basis eines, insbesondere nach einem Frequenzbandspreizverfahren (Spread Spectrum) und/oder einem Optimalfilterverfahren, modulierten Ausgangssignals erzeugt sind und das Ausgangssignal ein binäres Signal aus Nullen und Einsen ist, wobei
das Ausgangssignal mehr Nullen als Einsen aufweist und die Einsen im Wesentlichen zufällig in dem Lichtsignal (14) verteilt sind, wobei der Lichtsender (12) eingeschaltet ist, wenn eine Eins übertragen wird, und ausgeschaltet ist, wenn eine Null übertragen wird, und
**dadurch gekennzeichnet, dass**
das Ausgangssignal auf einer m-Sequenz basiert, wobei die Anzahl aufeinanderfolgender Nullen der m-Sequenz mit einem Faktor N, welcher größer 1 ist, erhöht wird.

2. Optoelektronischer Scanner (10) nach Anspruch 1,
**dadurch gekennzeichnet, dass**
die Lichtsignale (14) durch On-/Off-Keying erzeugt werden, wobei vorzugsweise maximal eine Eins in Folge gesendet wird.

3. Optoelektronischer Scanner (10) nach einem der Ansprüche 1 oder 2,
**dadurch gekennzeichnet, dass**
das Ausgangssignal mehr als zehn Mal mehr Nullen als Einsen aufweist.

4. Optoelektronischer Scanner (10) nach einem der vorstehenden Ansprüche,
**dadurch gekennzeichnet, dass**
direkt aufeinanderfolgende Einsen in der m-Sequenz in Nullen geändert werden, wobei jeweils nur die letzte Eins der aufeinanderfolgenden Einsen bestehen bleibt, und/oder nach jeder Eins eine Null eingefügt wird.

5. Optoelektronischer Scanner (10) nach einem der vorstehenden Ansprüche,
**dadurch gekennzeichnet, dass**
das Ausgangssignal durch ein stochastisches Verfahren erzeugt wird.

6. Optoelektronischer Scanner (10) nach einem der vorstehenden Ansprüche,
**dadurch gekennzeichnet, dass**
das Ausgangssignal quasi-orthogonal zu einem zweiten Ausgangssignal ist.

7. Optoelektronischer Scanner (10) nach einem der vorstehenden Ansprüche,
**dadurch gekennzeichnet, dass**
die Dauer einzelner Codeelemente des Lichtsignals (14) variiert.

8. Optoelektronischer Scanner (10) nach einem der vorstehenden Ansprüche,
**dadurch gekennzeichnet, dass**
alle Pulse (52) des Lichtsignals (14) gleiche Länge, gleiche Form und gleiche Bandbreite aufweisen.

9. Optoelektronischer Scanner (10) nach einem der vorstehenden Ansprüche,
**dadurch gekennzeichnet, dass**
der Lichtempfänger (26) einen Hochpassfilter zur Filterung der zurückgeworfenen Lichtsignale (22) umfasst, welcher vorzugsweise eine Grenzfrequenz von größer als 10 MHz aufweist.

10. Optoelektronischer Scanner (10) nach einem der vorstehenden Ansprüche,
**dadurch gekennzeichnet, dass**
die zurückgeworfenen Lichtsignale (22) in dem Lichtempfänger (26) mittels einer 1-Bit-Quantisierung abgetastet werden und der Lichtempfänger (26) zu diesem Zweck vorzugsweise einen Sigma-Delta-Wandler umfasst.

11. Optoelektronischer Scanner (10) nach einem der vorstehenden Ansprüche,
**dadurch gekennzeichnet, dass**
die zurückgeworfenen Lichtsignale (22) mit den ausgesandten Lichtsignalen (14) korreliert werden.

12. Verfahren zur Überwachung eines Überwachungsbereiches (20), bei dem
(i) ein binäres, Nullen und Einsen aufweisendes Ausgangssignal erzeugt wird,
(ii) von einem Lichtsender (12) ausgesandte Lichtsignale (14), die, insbesondere auf der Basis eines Frequenzbandspreizverfahrens (Spread Spectrum) und/oder eines Optimalfilterverfahrens, mit dem Ausgangssignal moduliert sind, ausgesandt und periodisch in den Überwachungsbereich (20) abgelenkt werden, und
(iii) aus von einem sich im überwachten Überwachungsbereich (20) befindlichen Objekt zurückgeworfenem Licht (22) ein Empfangssignal erzeugt wird, welches abgetastet und mit dem Ausgangssignal korreliert wird, wobei
das Ausgangssignal mehr Nullen als Einsen aufweist und die Einsen im Wesentlichen zufällig in dem Lichtsignal (14) verteilt sind, wobei der Lichtsender (12) eingeschaltet ist, wenn eine Eins übertragen wird, und ausgeschaltet ist, wenn eine Null übertragen wird, **dadurch gekennzeichnet, daß** das Ausgangssignal auf einer m-Sequenz basiert, wobei die Anzahl aufeinanderfolgender Nullen der m-Sequenz mit einem Faktor, welcher größer 1 ist, erhöht wird.

13. Verfahren nach Anspruch 12,
**dadurch gekennzeichnet, dass**
niederfrequente Anteile des Empfangssignals entfernt werden.

14. Verfahren nach Anspruch 12 oder 13,
**dadurch gekennzeichnet, dass**
aufeinanderfolgende Einsen in der m-Sequenz in Nullen geändert werden, wobei jeweils nur die letzte Eins der aufeinanderfolgenden Einsen bestehen bleibt, und/oder nach jeder Eins eine Null eingefügt wird.

## Claims

1. An optoelectronic scanner (10) for monitoring a monitored zone, comprising a light transmitter (12) for transmitting light signals (14); a light deflection unit (18) for the periodic deflection of the light signals (14) transmitted by the light transmitter (12) into the monitored zone (20); a light receiver (26) for receiving light (22) reflected back by an object located in the monitored zone (20) being monitored; and a control device (32) for generating and/or influencing the light signals (14), wherein
the light signals (14) transmitted by the light transmitter (12) into the monitored zone (20) are generated in each case on the basis of a modulated output signal, in particular modulated according to a frequency band spreading process (spread spectrum) and/or an optimum filter process, and the output signal is a binary signal of ZEROs and ONEs; wherein
the output signal has more ZEROs than ONEs and the ONEs are substantially randomly distributed in the light signal (14), wherein the light transmitter (12) is in an on-state when a ONE is transmitted and is in an off-state when a ZERO is transmitted,
**characterised in that**
the output signal is based on an m-sequence, with the number of successive ZEROs of the m-sequence being increased by a factor N which is greater than 1.

2. An optoelectronic scanner (10) in accordance with claim 1,
**characterised in that**
the light signals (14) are generated by on/off keying, with a maximum of one ONE preferably being transmitted in sequence.

3. An optoelectronic scanner (10) in accordance with one of the claims 1 or 2,
**characterised in that**
the output signal has more than ten times more ZEROs than ONEs.

4. An optoelectronic scanner (10) in accordance with any one of the preceding claims,
**characterised in that**
directly successive ONEs in the m-sequence are changed into ZEROs, with only the last ONE of the successive ONEs respectively remaining, and/or with a ZERO being inserted after each ONE.

5. An optoelectronic scanner (10) in accordance with any one of the preceding claims,
**characterised in that**
the output signal is generated by a stochastic process.

6. An optoelectronic scanner (10) in accordance with any one of the preceding claims,
**characterised in that**
the output signal is quasi-orthogonal to a second output signal.

7. An optoelectronic scanner (10) in accordance with any one of the preceding claims,
**characterised in that**
the duration of individual code elements of the light signal (14) varies.

8. An optoelectronic scanner (10) in accordance with any one of the preceding claims,
**characterised in that**
all pulses (52) of the light signal (14) have the same length, the same shape and the same bandwidth.

9. An optoelectronic scanner (10) in accordance with any one of the preceding claims,
**characterised in that**
the light receiver (26) comprises a high-pass filter for filtering the light signals (22) which are reflected back and the high-pass filter has a cut-off frequency of greater than 10 MHz.

10. An optoelectronic scanner (10) in accordance with any one of the preceding claims,
**characterised in that**
the light signals (22) reflected back are sampled in the light receiver (26) by means of a one-bit quantisation and the light receiver (26) preferably comprises a sigma-delta converter for this purpose.

11. An optoelectronic scanner (10) in accordance with any one of the preceding claims,
**characterised in that**
the light signals (22) reflected back are correlated with the transmitted light signals (14).

12. A method for the monitoring of a monitored zone (20), wherein
(i) a binary output signal comprising ZEROs and ONEs is generated;
(ii) light signals (14) which are transmitted by a light transmitter (12) and which are modulated by the output signal, in particular modulated on the basis of a frequency band spreading process (spread spectrum) and/or an optimum filter process, are transmitted and are periodically deflected into the monitored zone (20); and
(iii) a received signal is generated from light (22) reflected back by an object located in the monitored zone (20) being monitored and is sampled and correlated with the output signal, wherein
the output signal has more ZEROs than ONEs and the ONEs are substantially randomly distributed in the light signal (14), wherein the light transmitter (12) is in an on-state when a ONE is transmitted and is in an off-state when a ZERO is transmitted,
**characterised in that**
the output signal is based on an m-sequence, with the number of successive ZEROs of the m-sequence being increased by a factor N which is greater than 1.

13. A method in accordance with claim 12,
**characterised in that**
low-frequency portions of the received signal are eliminated.

14. A method in accordance with claim 12 or claim 13,
**characterised in that**
successive ONEs in the m-sequence are changed into ZEROs, with only the last ONE of the successive ONEs respectively remaining, and/or with a ZERO being inserted after each ONE.

## Revendications

1. Scanner optoélectronique (10) pour la surveillance d'une zone à surveiller, comprenant un émetteur de lumière (12) pour émettre des signaux lumineux (14), une unité de déflexion de lumière (18) pour défléchir périodiquement les signaux lumineux (14) émis par l'émetteur de lumière (12) vers la zone surveillée (20), un récepteur de lumière (26) pour recevoir de la lumière (22) renvoyée par un objet qui se trouve dans la zone surveillée (20), et une unité de commande (32) pour engendrer et/ou influencer les signaux lumineux (14),
dans lequel les signaux lumineux (14) émis par l'émetteur de lumière (12) vers la zone surveillée (20) sont engendrés respectivement sur la base d'un signal de sortie modulé, en particulier selon un procédé dit "à étalement de spectre de fréquences" (Spread Spectrum) et/ou selon un procédé de filtrage optimal, et le signal de sortie est un signal binaire composé de ZÉROs et de UNs,
dans lequel le signal de sortie comprend plus de ZÉROs que de UNs qui sont distribués sensiblement de manière aléatoire dans le signal lumineux (14), et l'émetteur de lumière (12) est en marche quand un UN est transmis et est à l'arrêt quand un ZÉRO est transmis, et
**caractérisé en ce que** le signal de sortie est basé sur une séquence-m dans laquelle le nombre de ZÉROs successifs de la séquence-m est augmenté d'un facteur N qui est supérieur à 1.

2. Scanner optoélectronique (10) selon la revendication 1,
**caractérisé en ce que** les signaux lumineux (14) sont engendrés par une procédure dite "On/Off-Keying" [saisie en tout-ou-rien], dans laquelle de préférence au maximum un UN est émis dans la succession.

3. Scanner optoélectronique (10) selon l'une des revendications 1 ou 2,
**caractérisé en ce que** le signal de sortie comprend plus de dix fois plus de ZÉROs que de UNs.

4. Scanner optoélectronique (10) selon l'une des revendications précédentes,
**caractérisé en ce que** des UNs qui se succèdent directement dans la séquence-m sont modifiés en ZÉROs, et seul le dernier UN parmi les UNs qui se succèdent demeure respectivement conservé, et/ou un ZÉRO est introduit après chaque UN.

5. Scanner optoélectronique (10) selon l'une des revendications précédentes,
**caractérisé en ce que** le signal de sortie est engendré par un procédé stochastique.

6. Scanner optoélectronique (10) selon l'une des revendications précédentes,
**caractérisé en ce que** le signal de sortie est quasi-orthogonal à un second signal de sortie.

7. Scanner optoélectronique (10) selon l'une des revendications précédentes,
**caractérisé en ce que** la durée d'éléments de code individuels du signal lumineux (14) est variée.

8. Scanner optoélectronique (10) selon l'une des revendications précédentes,
**caractérisé en ce que** toutes les impulsions (52) du signal lumineux (14) ont la même longueur, la même forme et la même largeur de bande.

9. Scanner optoélectronique (10) selon l'une des revendications précédentes,
**caractérisé en ce que** le récepteur de lumière (26) inclut un filtre passe- haut pour filtrer les signaux lumineux renvoyés (22), qui présente de préférence une fréquence limite plus élevée que 10 MHz.

10. Scanner optoélectronique (10) selon l'une des revendications précédentes,
**caractérisé en ce que** les signaux lumineux renvoyés (22) sont échantillonnés dans le récepteur de lumière (26) au moyen d'une quantification à 1-bit, et le récepteur de lumière (26) inclut à cet effet de préférence un convertisseur Sigma/Delta.

11. Scanner optoélectronique (10) selon l'une des revendications précédentes,
**caractérisé en ce que** les signaux lumineux renvoyés (22) sont mis en corrélation avec les signaux lumineux émis (14).

12. Procédé pour la surveillance d'une zone surveillée (20), dans lequel
(i) on engendre un signal de sortie binaire comprenant des ZÉROs et des UNs,
(ii) les signaux lumineux (14) émis par un émetteur de lumière (12), qui sont modulés avec le signal de sortie, en particulier sur la base d'un procédé dit "à étalement de spectre de fréquences" (Spread Spectrum) et/ou d'un procédé de filtrage optimal, sont émis et défléchis périodiquement vers la zone surveillée (20), et
(iii) à partir de la lumière (22) renvoyée par un objet qui se trouve dans la zone surveillée (20) on engendre un signal de réception qui est échantillonné et mis en corrélation avec le signal de sortie,
dans lequel le signal de sortie comprend plus de ZÉROs que de UNs et les UNs sont distribués sensiblement de manière aléatoire dans le signal lumineux (14), l'émetteur de lumière (12) étant en marche quand un UN est transmis et est à l'arrêt quand un ZÉRO est transmis,
**caractérisé en ce que** le signal de sortie est basé sur une séquence-m, dans laquelle le nombre de ZÉROs qui se succèdent dans la séquence-m est augmenté d'un facteur, qui est supérieur à 1.

13. Procédé selon la revendication 12,
**caractérisé en ce que** l'on élimine les parts du signal de réception à basse fréquence.

14. Procédé selon la revendication 12 ou 13,
**caractérisé en ce que** l'on modifie des UNS qui se succèdent dans la séquence-m en ZÉROs, et seul le dernier UN des UNs qui se succèdent demeure respectivement conservé, et/ou dans lequel on introduit un ZÉRO après chaque UN.
